# EUROPEAN PATENT APPLICATION

(11) **EP 1 762 318 A2**
(43) Date of publication of application: **14.03.2007**
(21) Application number: 06254753.4
(22) Date of filing: 13.09.2006
(51) Int. Cl.: B23B 13/02

(54) **Bar feeding apparatus and method**

(30) Priority: 13.09.2005 US 716401 P
(71) Applicant: Tolga Univer, 06300 Cankaya, Ankara (TR)
(72) Inventor: Tolga Univer, 06300 Cankaya, Ankara (TR)
(74) Representative: Findlay, Alice Rosemary

(57) **Abstract**

An apparatus (10) for feeding an elongate bar (16) into a spindle (156) generally comprises a base (12), a rack (14) proximate the base for holding a plurality of the elongate bars (16), a bar feeding support (18) mounted for upward and downward movement with respect to the base (12), and an intermediate bar loading mechanism (20) mounted for upward and downward movement with respect to the base (12) as well. The intermediate bar loading mechanism (20) is driven along an upward movement path in which it picks up one of the elongate bars (16) from the rack (14) and then moves laterally away from the rack (14) to transfer the bar (16) to the bar feeding support (18). The bar feeding support (18) may then allow feeding of the elongate bar (16) into the spindle (156).

## Description

The present invention generally relates to an automated bar feeding apparatus, and more specifically, to a bar feeding device for automatically feeding elongate bars into lathes or other machine tools.

Lathes and similar machine tools are used in a wide variety of industries to machine objects into a desired shape. In particular, the objects to be machined are often rotated about a spindle axis while cutting or abrasion elements are applied by the machine tool. The use of CNC to control the cutting operations has greatly improved efficiency by reducing the amount of human labour required to produce the machined part. To further increase the output of CNC lathes, however, the objects to be machined are often automatically fed into the lathe. Typically this involves using an automated feeding apparatus to transfer an elongate bar from a material rack into a position coaxial with the spindle of the machine tool. The bar is then transferred into the spindle to a final machining position so that the cutting elements may be applied.

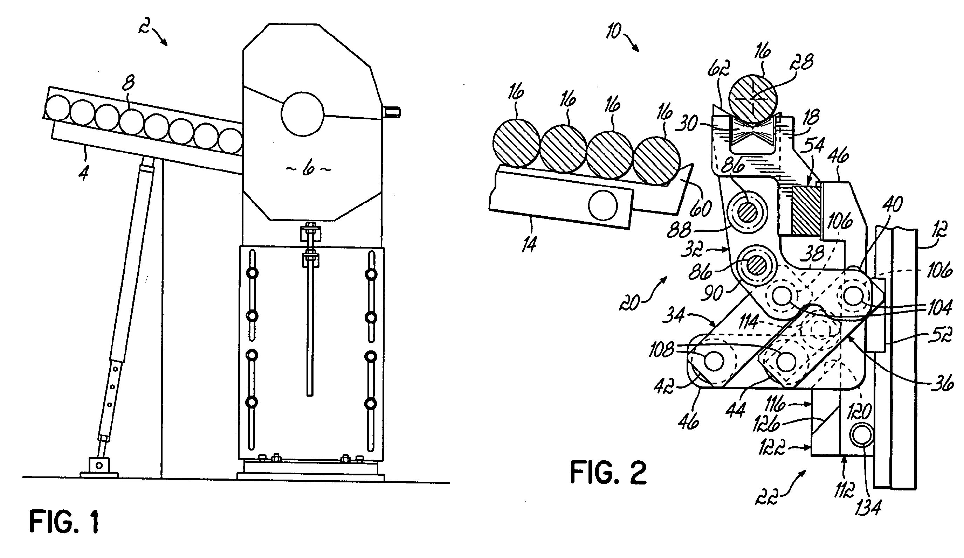

Fig. 1 generally illustrates a conventional arrangement of a bar feeding device or machine 2. A material rack 4 is shown on the left-hand side of the machine 2 and the main body 6 of the bar feeding device is shown on the right-hand side. Bars 8 may be placed in the rack 4 so as to be gravity fed, one at a time, into the main body 6 of the bar feeding device. Various challenges exist with the current bar feeding devices in the industry, including the ability to feed bar stock without significantly impacting the bar stock during the feeding procedure in ways that may damage the bars or create undesirable noise. In addition, the bar feeding device 2 must operate efficiently and quickly, and must be durable to withstand repeated operational cycles.

The present invention provides an apparatus for feeding an elongate bar into a machine tool having a spindle with a spindle axis. The apparatus may generally comprise a base, a rack proximate the base and adapted to hold a plurality of the elongate bars, a bar feeding support mounted for upward and downward movement with respect to the base, and an intermediate bar loading mechanism for transferring one of the elongate bars from the rack to the bar feeding support. The intermediate bar loading mechanism may be mounted for both upward and downward movement with respect to the base and lateral movement toward and away from the rack. After the intermediate bar loading mechanism has delivered a bar to the bar feeding support, the bar may be aligned with the spindle axis and fed into the spindle.

The intermediate bar loading mechanism may be driven from an initial position along an upward movement path in which it moves upward to pick up an elongate bar from the rack and laterally through an arcuate path to deposit the bar on the bar feeding support with little impact. The intermediate bar loading mechanism is then driven along a downward movement path in which it moves downward and laterally through an arcuate path to return to the initial position. The downward movement path is different than the upward movement path to allow the intermediate bar mechanism to initially move downward for a longer distance before moving laterally and returning to the initial position. This movement helps prevent the intermediate bar loading mechanism from contacting the rack or the plurality of bars held on the rack while moving downward with respect to the base.

In one particular aspect, the invention involves providing a bar loading support which moves laterally relative the base. In another particular aspect, the invention involves moving a bar loading support during which a bar is transferred to the bar loading support and then along a different downward movement path.

In one embodiment, the apparatus may further comprise a cam block mounted to the base and a cam follower operatively coupled to the intermediate bar loading mechanism. The cam block defines the upward and downward movement paths, which are transferred to the intermediate bar loading mechanism by the cam follower. More specifically, the cam follower is configured to cooperate with the cam block to drive the intermediate bar loading mechanism along the upward movement path and downward movement path. The cam block is configured to shift between a first lateral position and a second lateral position to transfer the cam follower from the upward movement path to the downward movement path.

The invention will now be described by way of example with reference to the accompanying drawings in which:

Fig. 1 is a schematic view of a conventional arrangement of a bar feeding apparatus for a machine tool having a spindle;

Fig. 2 is a side cross-sectional view of a bar feeding apparatus according to one embodiment of the invention;

Figs. 3A-3E are schematic views sequentially illustrating a bar loading support of the bar feeding apparatus of Fig. 2 transferring an elongate bar from a rack to a bar feeding support;

Fig. 4 is a schematic front view illustrating one arrangement for moving the components of the bar feeding apparatus of Fig. 2 upward and downward with respect to a base of the apparatus;

Fig. 4A is an enlarged schematic view of a transition set used in the arrangement shown in Fig. 4;

Fig. 5 is a schematic end view illustrating the arrangement of Fig. 4;

Fig. 6A is a front view of a cam block of the bar feeding apparatus shown in Fig. 2;

Fig. 6B is a side view of the cam block shown in Fig. 6A;

Fig. 7 is a schematic front view show a portion of the bar feeding apparatus of Fig. 2 with a cam follower removed for clarity;

Figs. 8A-8H are schematic views sequentially illustrating a cam follower of the apparatus of Fig. 2 moving from an initial position along an upward movement path and back to the initial position along a downward movement path;

Figs. 9A-9E are schematic front views sequentially illustrating the operation of a pusher piston system associated with the apparatus of Fig. 2; and

Figs. 10A and 10B are schematic top views illustrating the operation of pusher piston system of Figs. 9A-9E.

Fig. 2 schematically illustrates one embodiment of a bar feeding apparatus 10. The bar feeding apparatus 10 is designed to automatically feed elongate bars 16 of circular cross-section or other cross-sectional shapes into the spindle of a lathe or machine tool (not shown). To this end, the bar feeding apparatus 10 generally comprises a base 12, a rack 14 positioned proximate the base 12 and adapted hold a plurality of the elongate bars 16, a bar feeding support 18 mounted for upward and downward movement with respect to the base 12, and an intermediate bar loading mechanism 20 for transferring the elongate bars 16 from the rack 14 to the bar feeding support 18. In a raised position the bar feeding support 18 aligns elongate bar 16 with a spindle axis 28. Although various components are mounted to the base 12 to advance the bar 16 into the spindle for machining, only a potion of the base 12 is shown in Fig. 2 for the purposes of clarity. The movement of the intermediate bar loading mechanism 20 from the rack 14 to the bar feeding support 18 is controlled by a cam mechanism 22, as will be described in greater detail below.

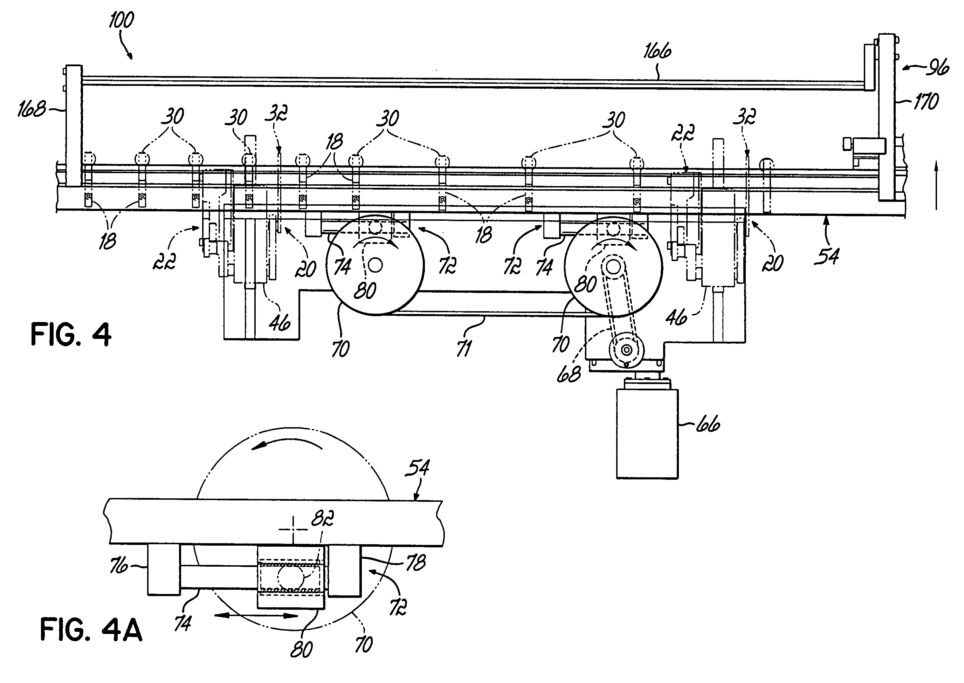

As shown in Figs. 2 and 4, the bar feeding support 18 includes a series of rollers 30 configured to rotate about respective axes transverse to the spindle axis 28. Each roller 30 may be substantially symmetrical about the transverse axis and may have a V-shaped profile to facilitate aligning the elongate bars 16 with the spindle axis 28. Only one bar feeding support 18 and roller 30 is shown in Fig. 2 because Fig. 2 is a view taken perpendicular to the lengthwise extent of the bar stock 16 and spindle axis 28. Those skilled in the art, however, will appreciate that the apparatus 10 may include as many bar feeding supports 18 as is necessary to support the elongate bar 16 to be fed into the spindle. For example, Fig. 4 illustrates numerous bar feeding supports 18 spaced across the length of the bar feeding apparatus 10. The same holds true with respect to the intermediate bar loading mechanism 20, only one of which is shown in Fig. 2 and two of which are shown in Fig. 4.

Still referring to Fig. 2, the intermediate bar loading mechanism 20 includes a bar loading support 32, a first guide member 34, and a second guide member 36. The first and second guide members 34, 36 each have respective first ends 38, 40 pivotally coupled to the bar loading support 32 and respective second ends 42, 44 pivotally coupled to a carriage member 46. The carriage member 46 is slidably mounted for upward and downward movement with respect to the base 12 by a linear guide 52, but cannot rotate relative to the base 12. Accordingly, the bar loading support 32, first guide member 34, second guide member 36, and carriage member 46 operate as a four bar linkage mechanism, as will be described in greater detail below. Both the carriage member 46 and bar feeding support 18 are mounted to a loading bar 54, which drives the upward and downward movement with respect to the base 12. The intermediate bar loading mechanism 20 is therefore configured to move upward or downward along with the bar feeding support 18. The bar loading support 32 of the intermediate bar loading mechanism 20 is also mounted for lateral movement toward and away from the rack 14 because of the four bar linkage mechanism.

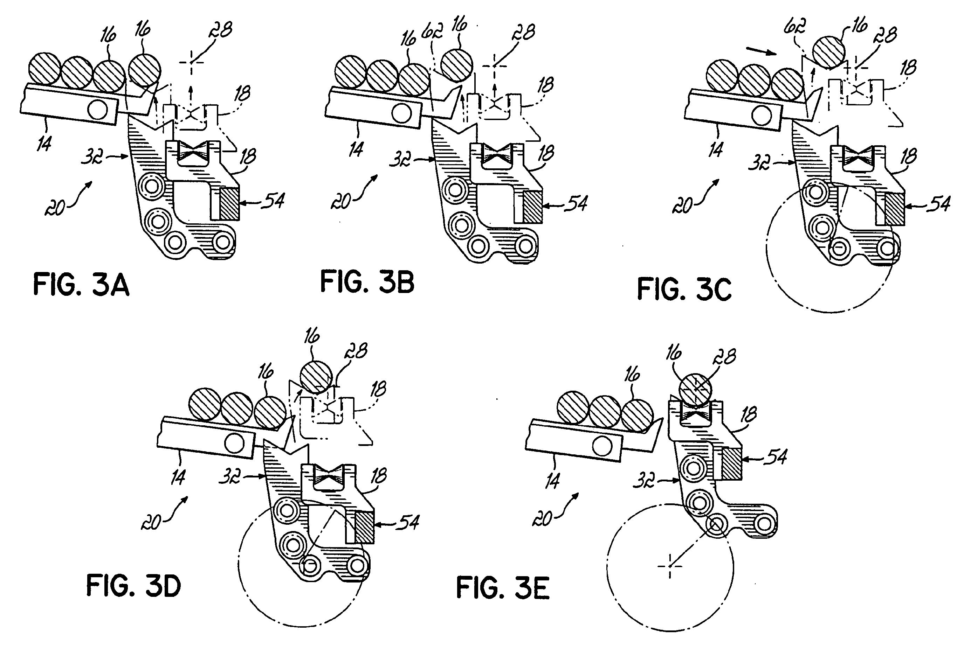

Still referring to Fig. 2 relative to structural details, Figs. 3A-3E schematically illustrate the vertical movement of the bar feeding support 18 and bar loading support 32 in further detail. Only the loading bar 54, bar feeding support 18, bar loading support 32, and rack 14 are shown in Figs. 3A-3E for clarity. As shown in Figs. 3A and 3B, the bar loading support 32 moves vertically along with the bar feeding support 18 to selectively pick up a bar 16 resting against a stop 60 on the rack 14. The bar loading support 32 may be designed with a V-shaped surface 62 as shown to facilitate picking up and retaining the bar 16. To deliver the bar 16 to the bar feeding support 18, the bar loading support 32 then begins to move through a cam-defined arcuate path in a lateral direction (or, in other words, a direction transverse to the axis of the bar stock 16) away from the rack 14 while continuing to rise upwardly along with the bar feeding support 18. This movement enables the remaining bars on the rack 14 to roll towards the stop 60 so that the next bar 16 occupies the position formerly occupied by the bar 16 that was removed.

After travelling through the cam-driven rotational path, the bar loading support 32 softly deposits the bar on the roller 30 of the bar feeding support 18. The arcuate movement of the bar loading support 32, along with its simultaneous upward movement with the bar feeding support 18 as also shown in Figs. 3A-3E, helps minimize any impact associated with transferring the bar 16. The bar feeding support 18 then holds the elongate bar 16 so that it is coaxially aligned with the spindle axis or center 28 as shown in Figs. 2 and 3E. Eventually the bar 16 is fed into the spindle, which will be described below.

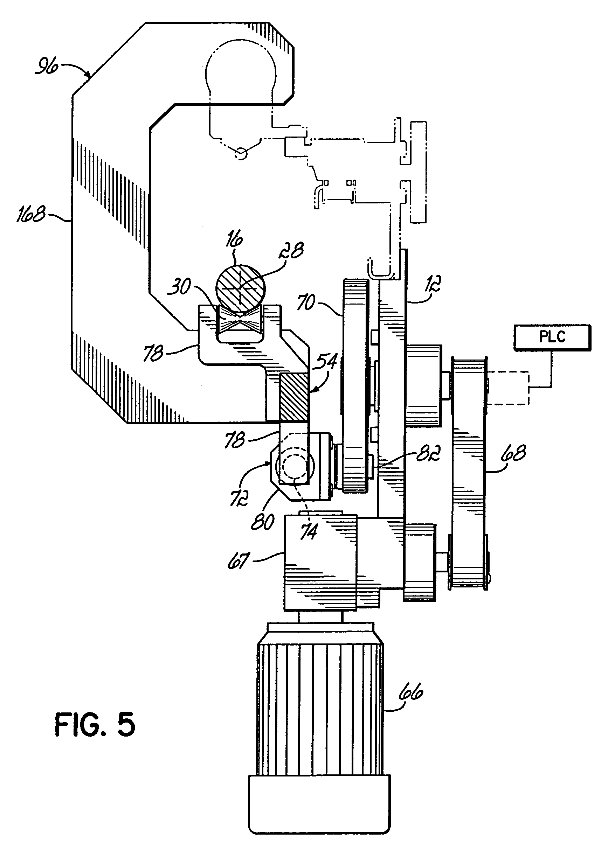

As shown in Figs. 4 and 5, a motor 66 and gear box 67 are provided to drive the bar feeding apparatus or system 10 via a transmission belt 68 and one or more rotatable loading drums 70. A belt 71 couples the loading drums 70 so that the motor 66 drives them simultaneously. The rotational movement of the loading drums 70 is transformed into vertical movement by a transition set 72. In one embodiment (Fig. 4A), the transition set 72 includes a slide bar 74 having first and second stops 76, 78 mounted to the loading bar 54 and a linear slide 80 slidably mounted to the slide bar 74. The linear slide 80 is also coupled to the loading drum 70 by a pin 82 and bearings (not shown). Thus, when the loading drum 70 rotates, the linear slide 80 follows the rotational path without rotating about the pin 82. This movement enables the linear slide 80 to drive the loading bar 54 upward or downward while sliding along the slide bar 74. The loading bar 54, in turn, causes the bar feeding support 18 and carriage member 46 to move upward and downward with respect to the base 12. Because the intermediate bar loading mechanism 20 is coupled to the carriage member 46, the bar loading support 32 moves upward and downward as well. In one embodiment, the loading drums 70 rotate 180□ in one direction to drive the intermediate bar loading mechanism 20 along an upward movement path and 180□ in the opposite direction to drive the intermediate bar loading mechanism 20 along a downward movement path.

Fig. 4 illustrates two carriage members 46 mounted to the loading bar 54, one on each side of the apparatus 10. The intermediate bar loading mechanism 20 and cam mechanism 22 are only shown schematically in Fig. 4 for clarity. Note, however, that the intermediate loading bar mechanisms 20 associated with the carriage members 46 may be operatively coupled to each other. For example, as shown in Fig. 2, shafts 86 may extend through a first bearing 88 and second bearing 90 on each of the bar loading supports 32. Such an arrangement helps ensure that the intermediate loading mechanisms 20 move along the same path simultaneously.

Figs. 4 and 5 also illustrate a pusher piston system 96 being coupled to the loading bar 54. The loading bar 54 positions brackets 168, 170 of the pusher piston system 96 with respect to the spindle center 28 so that a piston 166 supported between the brackets 168, 170 may be used to drive the elongate bars 16 into the spindle. This feature will be described in greater detail below.

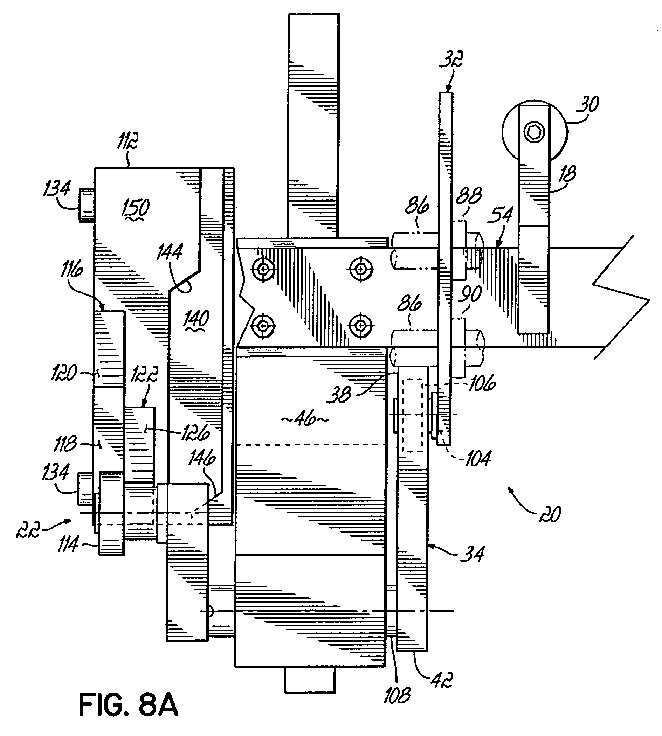

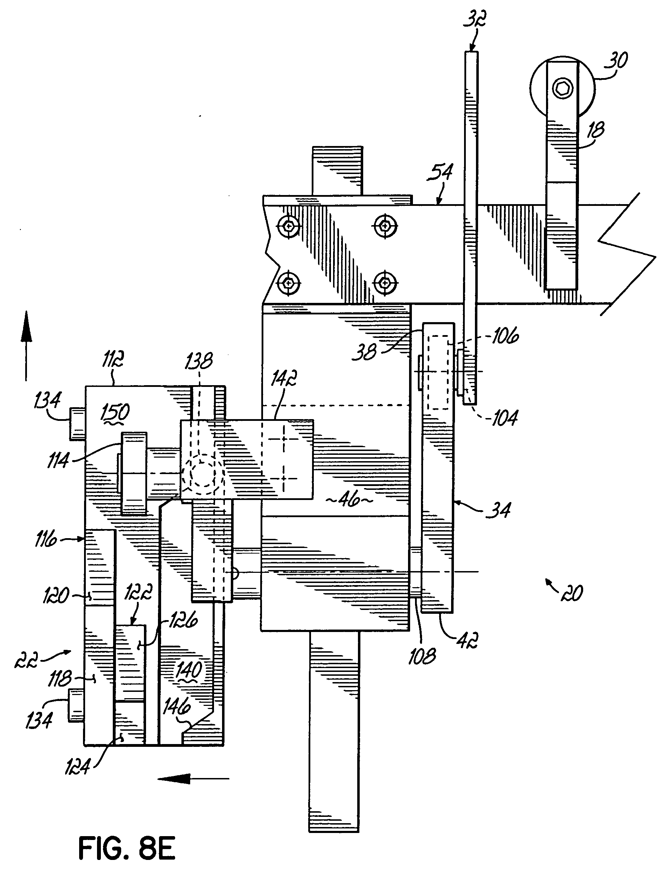

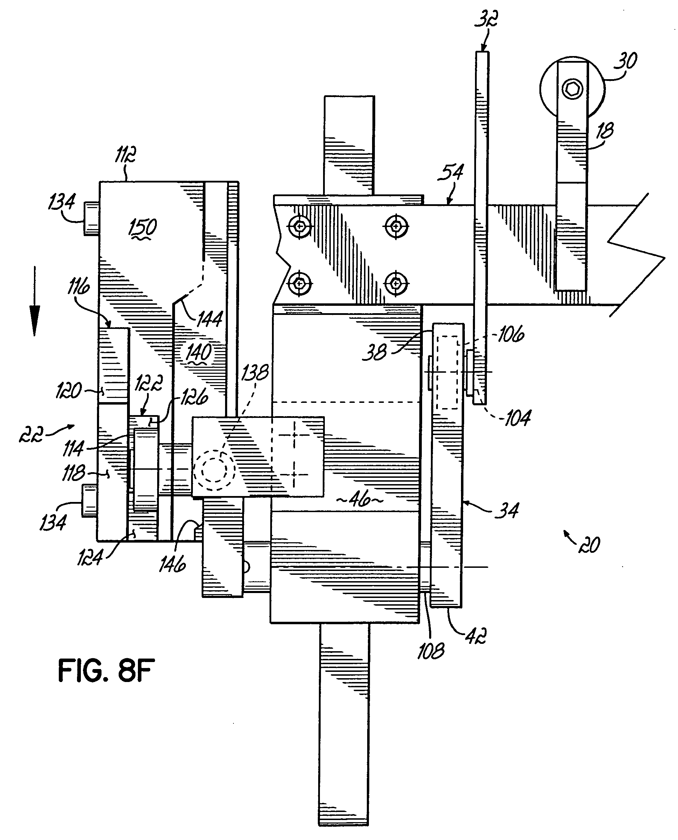

Referring now to Figs. 2,and 8A, the movement of the intermediate bar loading mechanism 20 will be described in detail. The first ends 38, 40 of the respective first and second guide members 34, 36 are assembled on shafts 104 that extend through bearings 106. The shafts 104 pivotally couple the first and second guide members 34, 36 to the bar loading support 32. Although the second ends 42, 44 are assembled to the carriage member 46 in a similar manner by shafts 108, the carriage member 46 is mounted to the linear guide 52 and cannot rotate relative to the base 12. Such an arrangement forms a four bar linkage, as mentioned above, with the carriage member 46 representing the "ground" or "fixed" link and the bar loading support 32 representing the "coupler" link. When either one of the guide members 34, 36 is rotated, the rotation results in an arcuate movement of the bar loading support 32 with respect to the carriage member 46.

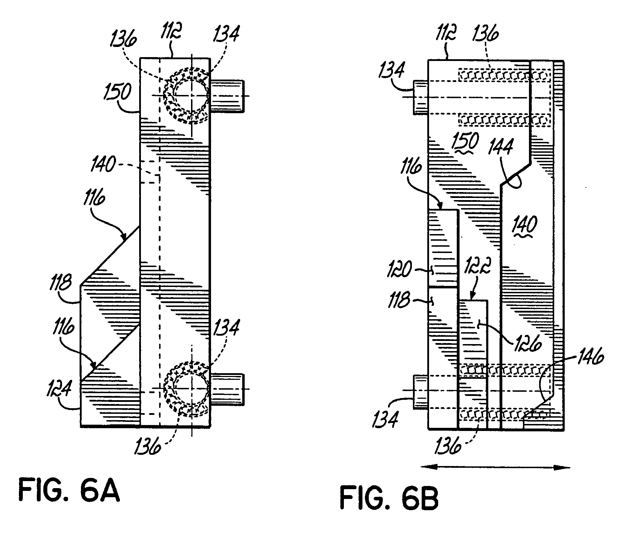

Either the first guide member 34 or second guide member 36 may be used as the input link for the four bar linkage mechanism. In the embodiment shown in the figures, however, the second guide member 36 is driven by the cam mechanism 22 and thus serves as the input link. The cam mechanism 22 comprises a cam block 112 (Figs. 6A and 6B) mounted to the base 12 and a cam follower 114 operatively coupled to the intermediate bar loading mechanism 20. The cam block 112 defines an upward movement path and a downward movement path, which are transmitted to the intermediate bar loading mechanism 20 by the cam follower 114. More specifically, a first portion 116 of the cam block includes a vertical surface 118 and inclined surface 120 for defining the upward movement path. A second portion 122 of the cam block 112 likewise includes a vertical surface 124 and inclined surface 126 for defining the downward movement path. The cam follower 114 is configured to cooperate with: (1) the vertical surfaces 118, 124 to drive the intermediate bar loading mechanism 20 upward or downward with respect to the base 20; and (2) the inclined surfaces 120, 126 to drive the intermediate bar loading mechanism 20 laterally towards and away from the rack 14 through an arcuate path.

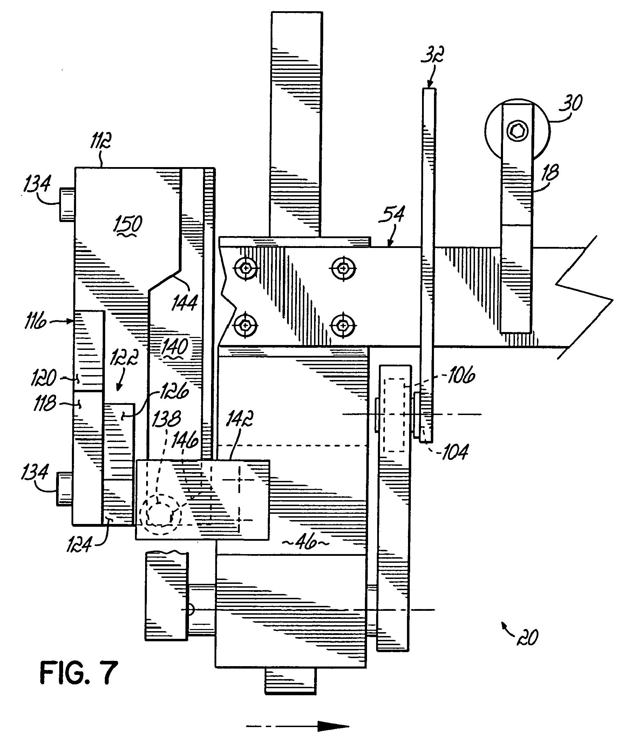

To shift the intermediate bar loading mechanism 20 between the upward movement path and downward movement path, the cam mechanism 22 is moveable between first and second positions. As shown in Figs. 6A and 6B, the cam block 112 may be slidably mounted upon one or more guide shafts 134 by bearings 136. The guide shafts 134 are coupled to the base 12 or another fixed structure of the bar feeding apparatus 10. Such an arrangement enables the cam block 112 to shift from a first lateral position in which the cam follower 114 is aligned with the upward movement path to a second lateral position in which the cam follower 114 is aligned with the downward movement path. The shifting may be accomplished by a guide pin or roller 138 (Fig. 7) configured to cooperate with a slotted guide way 140 defined by the cam block 112. Fig. 7 illustrates the relationship between the guide pin 138 and guide way 140, with the cam follower 114 being removed for clarity. The guide pin 138 is mounted to the carriage member 46 by a plate member 142 and is configured to follow the contour of the guide way 140 as the carriage member 46 is driven upward and downward with respect to the base 12. When the guide pin 138 contacts inclined surface 144 or 146 in the guide way 140, the resulting force causes the cam block 112 to shift laterally.

Figs. 8A-8H illustrate the movement of the cam follower 114 and shifting of the cam block 112 in further detail. More specifically, Figs. 8A-8H illustrate the bar feeding support 18 and intermediate bar loading mechanism 20 moving from an initial position along the upward movement path and then back to the initial position along the downward movement path. Fig. 8A represents the initial position of the bar feeding apparatus 10, with the guide pin 138 and plate member 142 being removed for clarity.

When the loading bar 54 moves vertically upward from the initial position, the cam follower 114 follows the upward movement path defined by the first portion 116 of the cam block 112. Movement along the initial vertical surface 118 brings the bar loading support 32 into contact with the first elongate bar 16 on the rack 14. Further movement along the inclined surface 120 results in arcuate movement of the bar loading support 32 to transfer the elongate bar 16 from the rack 14 to the bar feeding support 18 with little or no impact. More specifically, further movement along the inclined surface 120 causes the cam follower 114 to rotate the second guide member 36 of the intermediate bar loading mechanism 20. The second guide member 36, as the input link to the four bar linkage mechanism, drives the bar loading support 32 through the arcuate path from the rack 14 and toward the bar feeding support 18. This arcuate movement takes place while loading bar 54 continues to drive the bar feeding support 18 and carriage member 46 (and thus intermediate bar loading mechanism 20) upward with respect to the base 12.

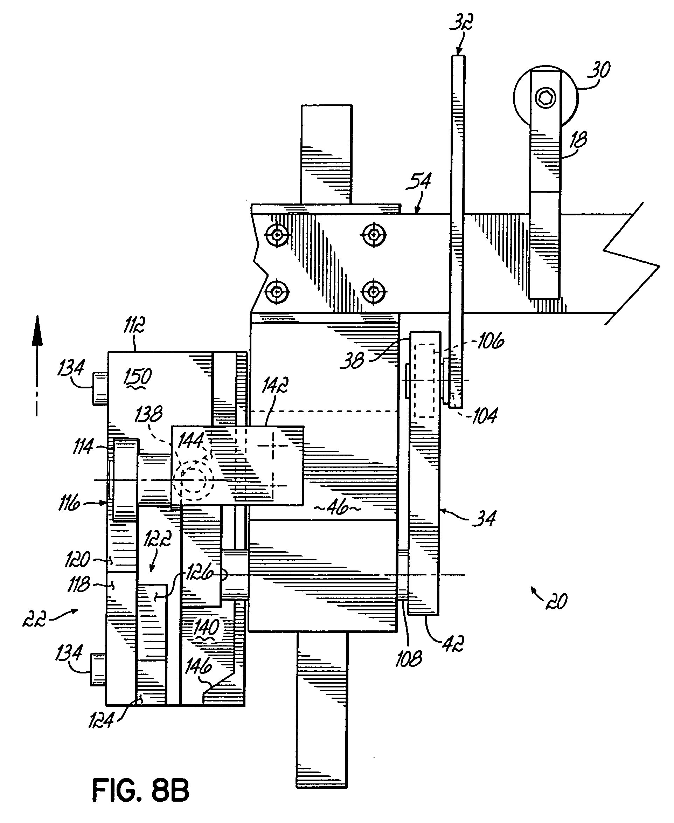

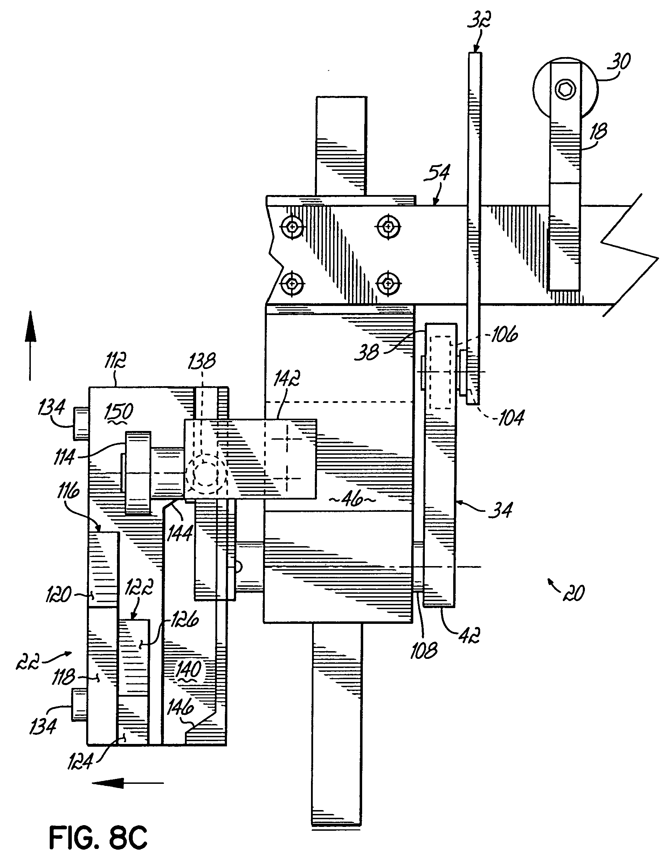

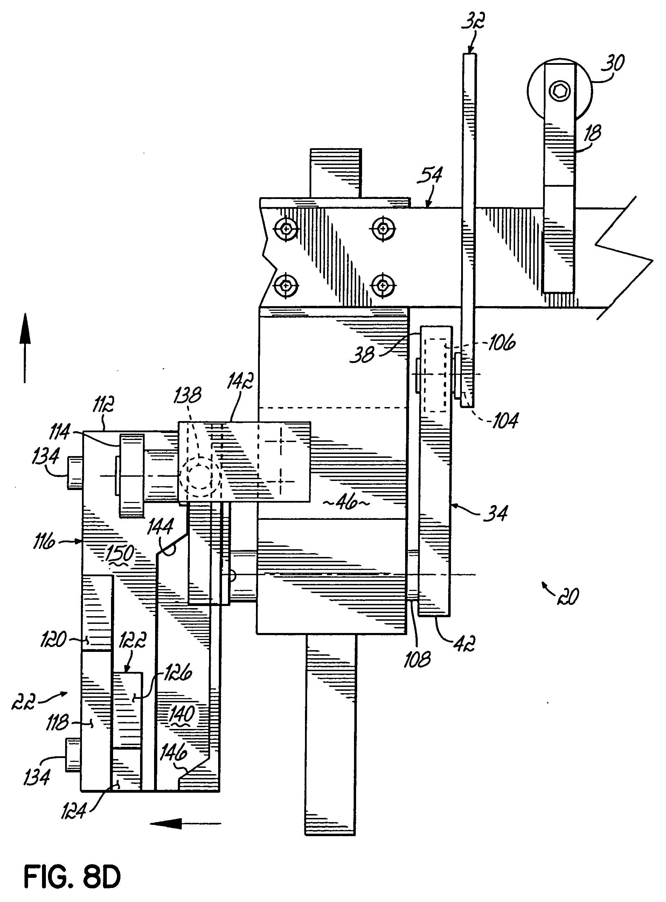

As shown in Figs. 8B and 8C, the guide pin 138 contacts the inclined surface 144 of the guide way 140 immediately after the cam follower 114 reaches the end of the inclined surface 120. The resulting contact force shifts the cam block 112 in a lateral direction as the carriage member 46 continues to be driven upward by the loading bar 54. At this point, the cam follower 114 is now in alignment with the downward movement path. For a brief distance the two movement paths overlap as the carriage member 46 and cam follower 114 move upward along a vertical surface 150 of the cam block to the position shown in Fig. 8D, which represents the end of the upward movement path and the beginning of the downward movement path.

After the elongate bar 16 is completely pushed into the spindle, which will be described below, the loading bar 54 starts to move downward with respect to the base 12. The cam follower 114 then moves down the vertical surface 150 and follows the downward movement path defined the second portion 122 of the cam block 112. During the cam follower's movement over the vertical surface 150, the bar loading support 32 moves downward simultaneously with the carriage member 46 and bar feeding support 18. The bar loading support 32 is positioned to avoid contact with the remaining bars on the rack 14 during this movement. Accordingly, the cam follower 114 travels along the vertical surface 150 for a longer distance when compared to its upward movement to allow the bar loading support 32 to travel past the rack 14 before moving laterally and thereby avoid any contact with the rack 14.

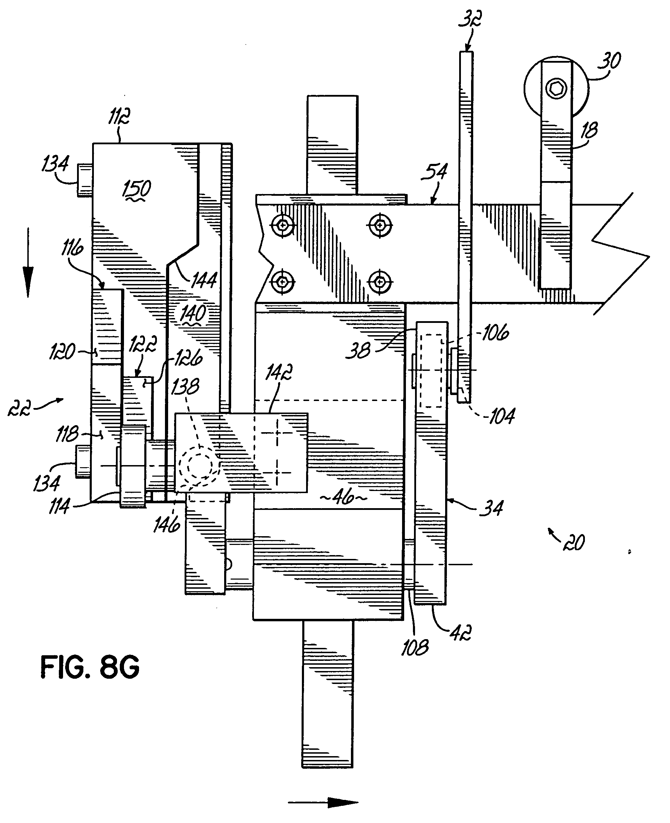

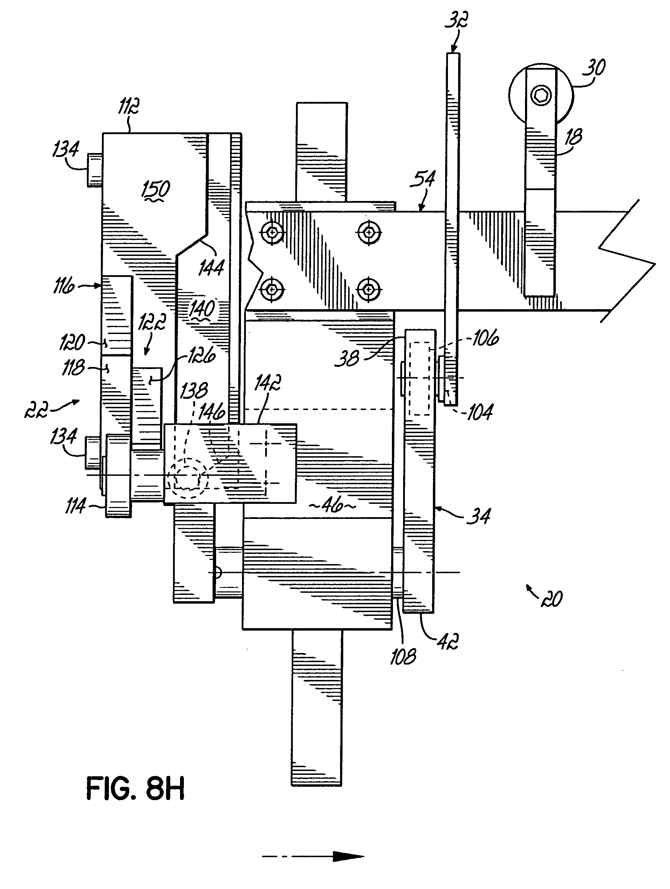

To return the bar feeding apparatus 10 to the initial position, the cam follower 114 engages the inclined surface 126 of the second portion 122 as the cam follower 114 continues to be driven downwardly by the loading bar 54. The cam follower's movement over the inclined surface 126 causes the second guide member 36 to rotate the bar loading support 32 through an arcuate path back toward the initial position. As shown in Figs. 8G and 8H, the guide pin 138 contacts the inclined surface 146 of the guide way 140 after the cam follower 144 has reached the vertical surface 124. The resulting contact forces shift the cam block 112 in a lateral direction so that the cam follower 114 is aligned with the upward movement path. The loading process may then be repeated to load the remaining bars from the rack 14 into the spindle.

The movement of both the intermediate bar loading mechanism 20 and bar feeding support 18 therefore enables the apparatus 10 to deliver bars 16 to a spindle without a significant amount of undesirable noise or damage to the bars 16. The minimal impact between the bars 16 and the other components also makes the apparatus 10 durable to withstand repeated operational cycles. As such, the loading cycle of the apparatus 10 may be repeated as many times as necessary to quickly and efficiently deliver bars 16 from the rack 14.

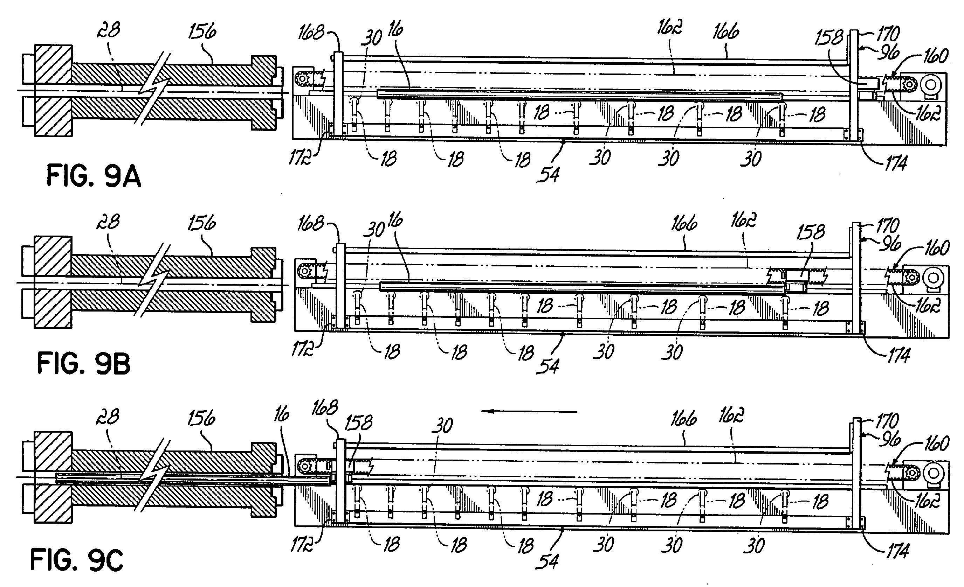

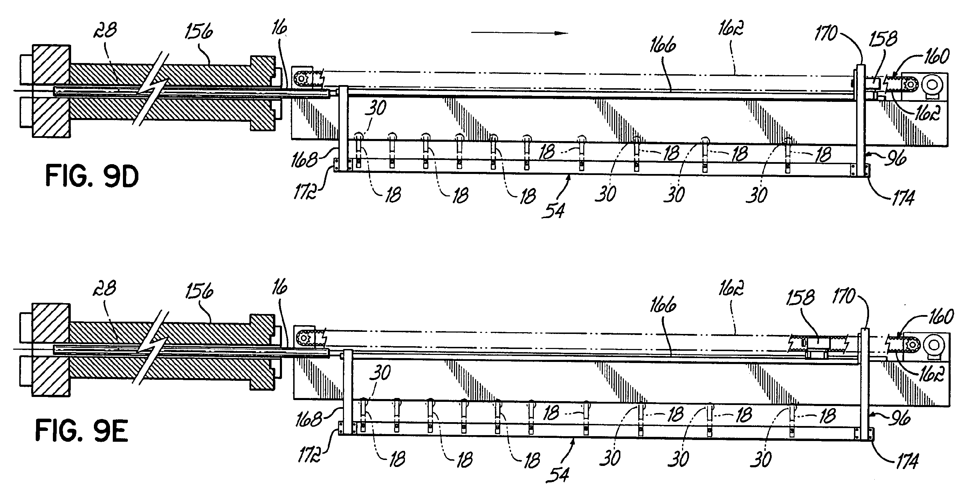

Figs. 9A-9E schematically illustrate the elongate bar 16 being fed into a spindle 156, with Fig. 9A representing the point of operation at which the upward movement path has been completed. In other words, in Fig. 9A the bar 16 has been loaded onto the bar feeding supports 18 and aligned with the spindle axis 28. A mechanical jaw 158 aligned with the spindle axis 28 is driven laterally toward the spindle 156 by a drive system 160 mounted to the base 12. More specifically, the mechanical jaw 158 is coupled to a feeding belt 162, which is driven by a servo motor (not shown) mounted to the base 12. As the jaw 158 moves in a lateral direction, it engages the elongate bar 16 and feeds it into the spindle 156.

A pusher piston system 96 is coupled to the loading bar 54, as noted above. The pusher piston system 96 includes a pusher piston 166 retained by brackets 168, 170 mounted to the loading bar 54. In one embodiment, the brackets 168, 170 are C-shaped (see Fig. 5) and mounted to opposed ends 172, 174 of the loading bar 54 to avoid interfering with the intermediate bar loading mechanism 20 and the loading of the bars 16. The pusher piston 166 is retained within bearings (not shown) in the brackets 168, 170 and adapted for movement in a direction parallel to the spindle axis 28. When the elongate bar 16 is being fed into the spindle 156 by the mechanical jaw 158, the brackets 168, 170 position the pusher piston 166 above the spindle axis 28.

After the jaw 158 advances the bar 16 past the bracket 168, the bar 16 is released and the feeding belt 162 moves the jaw 158 back to its initial position. The loading bar 54 then moves downward, bringing the brackets 168, 170 downward as well until the pusher piston 166 is aligned with the spindle axis 28. Fig. 9D represents the point at which the loading bar 54 has moved downward and the intermediate bar loading mechanism 20 has completed its downward movement path. To further advance the elongate bar 16 into the spindle 156, the pusher piston 166 may then be advanced along the spindle axis 28 by the mechanical jaw 158.

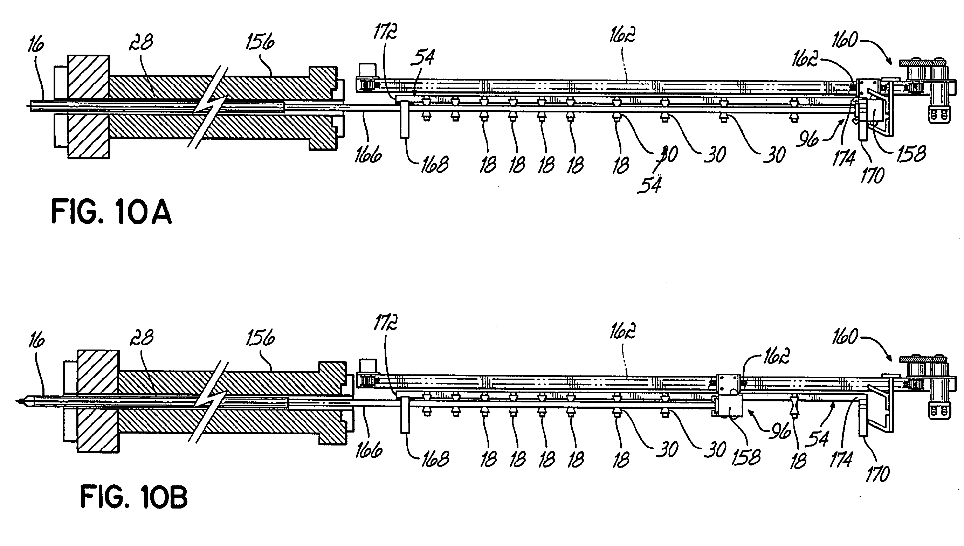

Figs. 10A and 10B are different views schematically illustrating the pusher piston 166 being advanced. The jaw 158 engages the pusher piston 166 and is driven toward the spindle 156 by the feeding belt 162. The pusher piston 166 then slides through the bearings in the brackets 168, 170 to advance the bar 16 to its final position for machining within the spindle 156. At this point, the mechanical jaw 158 and pusher piston 166 may be returned to their initial positions. The jaw 158 then releases the pusher piston 166 to allow upward movement of the loading bar 54 so that the feeding cycle may be repeated with a second elongate bar. It will be appreciated that various types of bar pushing mechanisms may be used in place of that described with respect to Figs. 9A-9E and 10A-10B.

While the present invention has been illustrated by a description of an illustrative embodiment in considerable detail, additional advantages and modifications will readily appear to those skilled in the art.

## Claims

1. An apparatus for feeding an elongate bar into a machine tool having a spindle with a spindle axis, comprising a base, a rack proximate the base, said rack adapted to hold a plurality of the elongate bars, a bar feeding support mounted for upward and downward movement with respect to said base, and an intermediate bar loading mechanism with a bar loading support mounted for upward and downward movement with respect to said base and lateral movement toward and away from said rack, wherein said bar loading support moves upward toward said rack to pick up one of the elongate bars and then laterally toward said bar feeding support to deliver said one bar onto said bar feeding support, said bar feeding support being movable upwardly to the spindle axis to allow feeding of said one bar into the spindle.

2. The apparatus of claim 1, further comprising a carriage member slidably mounted to said base for upward and downward movement with respect to said base, wherein said intermediate bar loading mechanism further includes a first guide member having a first end pivotally coupled to said bar loading support and a second end pivotally coupled to said carriage member.

3. The apparatus of claim 2, wherein said intermediate bar loading mechanism further comprises a second guide member having a first end pivotally coupled to said bar loading support and a second end pivotally coupled to said carriage member, whereby said bar loading support, said first guide member, said second guide member, and said carriage member operate as a four-bar linkage mechanism.

4. The apparatus of any preceding claim, wherein said intermediate bar loading mechanism moves along an upward movement path and a downward movement path, the apparatus further comprising a cam mechanism movable between first and second positions to shift said intermediate bar loading mechanism between said upward movement path and said downward movement path.

5. The apparatus of claim 4, wherein said cam mechanism comprises a cam block mounted to the base, said cam block defining said upward movement path and said downward movement path, and a cam follower operatively coupled to said intermediate bar loading mechanism and configured to cooperate with said cam block to drive said intermediate bar loading mechanism along said upward movement path and said downward movement path.

6. An apparatus for feeding an elongate bar into a machine tool having a spindle with a spindle axis, comprising a base, a rack proximate the base, said rack adapted to hold a plurality of the elongate bars, a bar feeding support mounted for upward and downward movement with respect to said base, and an intermediate bar loading mechanism mounted for movement along an upward movement path and a downward movement path, said downward movement path being different than said upward movement path, wherein said intermediate bar loading mechanism is configured to deliver one of said plurality of elongate bars from said rack to said bar feeding support while moving along said upward movement path, said bar feeding support being movable upwardly to the spindle axis during said upward movement path to allow feeding of said one bar into the spindle.

7. The apparatus of claim 6, further comprising a cam mechanism movable between first and second positions to shift said intermediate bar loading mechanism between said upward movement path and said downward movement path.

8. The apparatus of claim 7, wherein said cam mechanism comprises a cam block mounted to the base and having a first portion defining said upward movement path and a second portion defining said downward movement path, and a cam follower operatively coupled to said intermediate bar loading mechanism and configured to cooperate with said first and second portions of said cam block to drive said intermediate bar loading mechanism along said upward movement path and said downward movement path.

9. The apparatus of claim 8, wherein said first and second portions each include a vertical surface and an inclined surface, said cam follower being configured to cooperate with said vertical surfaces to drive said intermediate bar loading mechanism upward or downward with respect to said base and with said inclined surfaces to drive said intermediate bar loading mechanism laterally towards and away from said rack, said vertical surface of said first portion being larger than said vertical surface of said second portion.

10. The apparatus of either claim 5 or claim 9, wherein said cam block is configured to shift between a first lateral position and a second lateral position to transfer said cam follower from said upward movement path to said downward movement path.

11. The apparatus of claim 10, wherein said cam block defines a guide way and said cam mechanism further comprises a guide pin operatively coupled to said intermediate bar loading mechanism, said guide pin being configured to cooperate with said guide way to shift said cam block between said first lateral position and said second lateral position.

12. The apparatus of any preceding claim, further comprising a loading bar operatively coupled to said bar feeding support and said intermediate bar loading mechanism, and a loading drum configured to drive said loading bar upward and downward with respect to said base.

13. The apparatus of claim 12, further comprising a slide bar mounted to said loading bar, and a linear slide coupled to said loading drum and slidably mounted to said slide bar whereby rotating said loading drum causes said linear slide to drive said loading bar upward or downward with respect to said base while shifting laterally along said slide bar.

14. The apparatus of any preceding claim, wherein said bar feeding support includes a roller configured to rotate about an axis transverse to the spindle axis, said roller having a V-shaped profile and being substantially symmetrical about said transverse axis.

15. A method of feeding an elongate bar into a machine tool have a spindle with a spindle axis, comprising moving a bar feeding support and a bar loading support upward with respect to a base, transferring an elongate bar from a rack proximate the base to the bar loading support, the rack being adapted to hold a plurality of the elongate bars, moving the bar loading support laterally toward the base, and transferring the elongate bar from the bar loading support to the bar feeding support.

16. The method of claim 15, wherein moving the bar feeding support and bar loading support upward further comprises rotating a loading drum to drive a loading bar upward with respect to the base, the bar feeding support and bar loading support being operatively coupled to the loading bar.

17. A method of feeding an elongate bar into a machine tool have a spindle with a spindle axis, comprising moving a bar feeding support upward with respect to a base, moving a bar loading support from an initial position along an upward movement path, transferring an elongate bar from a rack positioned proximate the base to the bar loading support during the upward movement path, the rack being adapted to hold a plurality of the elongate bars, transferring the elongate bar from the bar loading support to the bar feeding support, and moving the bar loading support back to the initial position along a downward movement path, the downward moving path being different than the upward movement path.

18. The method of any one of claims 15 to 17, further comprising aligning the bar feeding support with the spindle axis, and feeding the elongate bar from the bar feeding support into the spindle.

19. The method of claim 18 as dependent on claim 17, wherein moving the bar loading support along the downward movement path further comprises aligning a pusher piston with the spindle axis, the method further comprising advancing the pusher piston along the spindle axis to further feed the elongate bar into the spindle.

20. The method of either claim 17 or claim 19, wherein moving the bar loading support along the upward movement path further comprises moving the bar loading support upward to pick up one of the elongate bars from the rack and then laterally toward the bar feeding support.

21. The method of claim 20, wherein moving the bar loading support along the downward movement path further comprises moving the bar loading support downward until the bar loading support is positioned below the elongate bars on the rack and then laterally toward the initial position.

22. The method of any one of claims 17 and 19 to 21, wherein the movement of the bar loading support is controlled by a cam mechanism, the method further comprising shifting the cam mechanism from a first position to a second position to move the bar loading support from the upward movement path to the downward movement path.

23. The method of claim 22, the cam mechanism including a cam block mounted to the base and a cam follower operatively coupled to the bar loading support, the cam block defining the upward movement path and downward movement path, wherein shifting the cam mechanism further comprises shifting the cam block from a first lateral position to a second lateral position to move the cam follower from the upward movement path to the downward movement path.

24. The method of any one of claims 15 to 23, wherein transferring the elongate bar to the bar feeding support further comprises depositing the elongate bar on a roller of the bar feeding support, the roller being configured to rotate about an axis transverse to the spindle axis and having a V-shaped profile for receiving the elongate bar.
